# FASCICULE DE BREVET EUROPEEN

(11) **EP 4 065 670 B1**
(45) Date de publication et mention de la délivrance du brevet: **03.01.2024**
(21) Numéro de dépôt: 20807790.9
(22) Date de dépôt: 20.11.2020
(51) Int. Cl.: C10L 1/14, C10L 1/182, C10L 1/18, C10L 1/19, C10L 10/08, C10L 10/16, C10L 1/188

(54) **ADDITIF DE LUBRIFIANCE POUR CARBURANT**
KRAFTSTOFFSCHMIERMITTELZUSATZ
FUEL LUBRICITY ADDITIVE

(30) Priorité: 25.11.2019 FR 1913156
(43) Date de publication de la demande: 05.10.2022
(73) Titulaire: TotalEnergies OneTech, 92400 Courbevoie (FR)
(72) Inventeur: DUBOIS, Thomas, 69360 Solaize (FR)
(74) Mandataire: Casalonga
(86) Numéro de dépôt international: PCT/EP2020/082976
(87) Numéro de publication internationale: WO 2021/105024

(56) Documents cités:
- WO-A1-2017/037392
- US-A1- 2005 268 530
- US-A1- 2007 124 992

## Description

La présente invention concerne une composition de carburant qui comprend un additif particulier pour carburant de moteur, notamment pour carburant gazole (diesel) ou essence. L'additif comprend au moins 6% en poids de stérols totaux (stérols libres et/ou esters de stérols) et de 70% à 94% en poids d'acides gras libres, ces teneurs étant exprimées par rapport au poids total de l'additif.

L'additif selon l'invention est plus particulièrement destiné aux carburants pour moteurs, de préférence à combustion interne, présentant une faible teneur en soufre, par exemple inférieur à 500 ppm en poids, de préférence inférieur à 10 ppm en poids, et dans laquelle il présente de bonnes propriétés de lubrifiance.

L'invention concerne également l'utilisation, pour améliorer les propriétés de lubrifiance d'un carburant moteur, d'un additif qui comprend au moins 6% en poids de composés choisis parmi les stérols libres et/ou esters de stérols et de 70% à 94% en poids d'acides gras libres, ces teneurs étant exprimées par rapport au poids total de l'additif.

### ETAT DE L'ART ANTERIEUR

Afin de limiter les rejets des émissions polluantes, de nombreuses réglementations imposent des teneurs en composés soufrés relativement basses dans les carburants, essences et gazoles. À cet effet, les hydrocarbures utilisés pour la fabrication de carburants sont soumis à des procédés d'hydrotraitement : l'hydrodésulfuration par action de l'hydrogène à chaud à 350 °C et sous pression (50 à 100 bar et plus), avec catalyseur, dans le but d'éliminer les composés soufrés qu'ils contiennent naturellement. Cette élimination des composés soufrés entraine une perte du pouvoir lubrifiant des carburants obtenus.

Or, les carburants, de type gazole et essence, et les carburants destinés à l'aviation doivent posséder des aptitudes à la lubrification pour la protection des pompes, des systèmes d'injection et de toutes les parties en mouvement avec lesquels ces produits entrent en contact dans un moteur, en particulier à combustion interne. Des additifs doivent alors être ajoutés à ces carburants afin de restaurer leur pouvoir lubrifiant.

Il est connu d'utiliser les acides gras comme additifs de lubrifiance. En général, les acides gras utilisés sont produits par fractionnement des huiles végétales ou animales. Par exemple, les acides gras de l'huile de tall ou TOFA (de l'anglais « Tall Oil Fatty Acids ») sont connus pour avoir de bonnes propriétés de lubrifiance dans les gazoles à faible taux de soufre (WO9804656). Ces acides gras présentent généralement un indice d'acide fort. Le gain sur l'amélioration de la lubrifiance est important à faible dosage mais tend à atteindre assez rapidement un plateau au fur et à mesure que le dosage augmente.WO 2017/037392 A1 et US 2005/268530 A1 divulguent des compositions de carburants à faible teneur en soufre, comprenant des additifs lubrifiants à base d'acides gras libres. à

Il est par ailleurs connu d'utiliser les mono-glycérides et di-glycérides comme additifs de lubrifiance. Les mono- et di-glycérides sont des esters partiels produits de la réaction entre des acides gras et le glycérol (en excès). Ils présentent un indice d'acide très faible : on parle de lubrifiance neutre. Cependant, l'amélioration de la lubrifiance n'est généralement pas immédiate à faible dosage, nécessitant l'utilisation de quantités importantes, ce qui augmente le coût du traitement.

Il est également connu d'utiliser les pâtes de neutralisation obtenues par acidification d'au moins une huile végétale et/ou animale. Cependant ces huiles acides obtenues peuvent présenter des taux de triglycérides élevés, qui n'ont qu'un effet limité sur la lubrifiance. De plus, cette acidification coûte cher en équipements, notamment du fait de la neutralisation alcaline, n'est pas écologique car beaucoup d'eau/de vapeur et d'électricité sont nécessaires. De plus, beaucoup de déchets subsistent après ce raffinage chimique et des quantités importantes d'agent alcalin (soude) sont utilisées.

Les solutions existantes en gazole n'étant pas satisfaisantes, trop chères et dépensières en énergie, en eau et en investissement d'installations, et aboutissant à trop de déchets produits ; et peu de solutions en essence existant, il subsiste un besoin de trouver de nouveaux additifs de lubrifiance pour carburant, notamment de moteur à combustion interne, notamment pour les carburants de type gazole ou essence, qui soient peu coûteux, efficaces, utilisent peu d'équipements et peu de composés chimiques, et qui valorisent des déchets.

### OBJET DE L'INVENTION

La demanderesse a découvert qu'un additif particulier, contenant des stérols et des acides gras libres, et tel que décrit ci-après, possède des propriétés remarquables et inattendues dans les carburants liquides de moteur à combustion interne. Cet additif permet de garantir et améliorer le pouvoir lubrifiant des carburants.

Les avantages additionnels de l'additif pour carburants selon l'invention sont :
- la protection des pompes, des systèmes d'injection et de toutes les parties en mouvement avec lesquels cet additif entre en contact dans un moteur,
- un fonctionnement optimal du moteur,
- une économie due à moins d'entretien du moteur,
- une réduction de la consommation de carburant,
- la valorisation de déchets issus de la distillation des huiles,
- le faible coût de revient de cet additif.

La présente invention a ainsi pour objet une composition de carburant pour moteur comprenant :
(1) au moins une coupe d'hydrocarbures liquide issue d'une ou de plusieurs sources choisies parmi le groupe consistant en les sources minérales, animales, végétales et synthétiques, et
(2) de 1 à 10 000 ppm en poids d'un additif qui comprend au moins 6% en poids, par rapport au poids total de l'additif, d'un ou plusieurs composés choisis parmi les stérols libres et/ou les esters de stérols et de 70% à 94% en poids, par rapport au poids total de l'additif, d'acides gras libres.

Selon un mode de réalisation, cet additif est issu d'un procédé de raffinage d'une ou plusieurs huiles végétale(s) et/ou animale(s), et notamment issu d'une opération de désodorisation d'une ou plusieurs huiles végétale(s) et/ou animale(s), qui consiste en une distillation, ou distillation neutralisante, desdites huiles, permettant d'obtenir des échappées de désodorisation . Les produits issus d'une désodorisation d'huile sont également connus sous l'appellation « deodorizer distillates », en anglais.

De préférence, la coupe d'hydrocarbures liquide (1) est choisie parmi les essences et les gazoles.

De préférence, la teneur de l'additif va de 5 à 10 000 ppm en poids, de préférence de 10 à 1000 ppm en poids, plus préférentiellement de 25 à 500 ppm en poids, et mieux encore de 150 à 250 ppm en poids, par rapport au poids total de la composition de carburant.

De préférence, la teneur en soufre dans la composition de carburant, est inférieure ou égale à 5000 ppm en poids, de préférence inférieure ou égale à 500 ppm en poids, et plus préférentiellement inférieure ou égale à 50 ppm en poids, encore plus préférentiellement inférieure ou égale à 10 ppm en poids par rapport au poids total de la composition.

L'invention a également pour objet l'utilisation, pour améliorer les propriétés de lubrifiance d'un carburant moteur, d'un additif qui comprend au moins 6% en poids, par rapport au poids total de l'additif, d'un ou plusieurs composés choisis parmi les stérols libres et/ou les esters de stérols et de 70% à 94% en poids, par rapport au poids total de l'additif, d'acides gras libres.

D'autres objets, caractéristiques, aspects et avantages de l'invention apparaîtront encore plus clairement à la lecture de la description qui suit.

Dans ce qui suit, et à moins d'une autre indication, les bornes d'un domaine de valeurs sont comprises dans ce domaine, notamment dans les expressions « compris entre » et « allant/va/s'étend de ... à ... ». Par ailleurs, les expressions « au moins un » et « au moins » utilisées dans la présente description sont respectivement équivalentes aux expressions «un ou plusieurs » et «supérieur ou égal ».

### DESCRIPTION DETAILLEE

### L'additif

L'invention met en oeuvre un ou plusieurs additifs comprenant au moins 6% en poids de stérols libres et/ou esters de stérols et de 70% à 94% en poids d'acides gras libres, ces teneurs étant exprimées par rapport au poids total de l'additif.
i) De préférence, l'additif selon l'invention comprend au moins 2% en poids d'ester(s) de stérol(s) et au moins 4% en poids de stérol(s) libre(s) par rapport au poids total de l'additif, de préférence au moins 2,3% en poids d'ester(s) de stérol(s) et au moins 4,5% en poids de stérol(s) libre(s) par rapport au poids total de l'additif.
ii) De préférence, l'additif comprend au moins 80% en poids d'acides gras libres, par rapport au poids total de l'additif.
iii) De préférence, l'additif présente une teneur en poids en acides gras libres C18:1 et C18:2 supérieure ou égale à 30% en poids, de préférence supérieure ou égale à 50% en poids, préférentiellement supérieure ou égale à 70% en poids, par rapport au poids total de l'additif.
iv) De préférence, l'additif a un point d'écoulement inférieur ou égal à 0°C, selon la norme ASTM D 7346.
v) Selon un mode de réalisation, l'additif présente une teneur en acides gras libres contenant deux insaturations inférieure ou égale à 25% en poids par rapport au poids total de l'additif, préférentiellement inférieure ou égale à 22% en poids, préférentiellement inférieure ou égale à 21% en poids, préférentiellement comprise entre 19% et 20% en poids.
vi) Selon un mode de réalisation, l'additif comprend de 50 à 65% en poids d'acides gras libres mono-insaturés, et de 20 à 30 % en poids d'acides gras libres poly-insaturés par rapport au poids total d'acides gras ; il peut également comprendre de 5 à 14% en poids d'acides gras libres saturés par rapport au poids total d'acides gras.
vii) De préférence, l'additif comprend une teneur en poids en tocophérol(s) d'au moins 1% en poids par rapport au poids total de l'additif, de préférence d'au moins 1,5% en poids, de préférence d'au moins 2% en poids, encore plus préférentiellement d'au moins 2,5% en poids, encore plus préférentiellement d'au moins 2,8% en poids, par rapport au poids total de l'additif.

L'additif selon l'invention peut en outre avantageusement présenter une ou plusieurs des caractéristiques suivantes:
viii) une teneur en poids en monoglycérides et/ou diglycérides de 0,001 à 15% en poids, ou de 0,5% à 5% en poids, encore plus préférentiellement de 0,8% à 3% en poids, par rapport au poids total de l'additif ;
xi) une teneur en poids de triglycérides de 0 à 13% en poids, de 0 à 12%, de préférence de 0 à 10%, de préférence de 0 à 7%, encore plus préférentiellement de 0 à 5%, voire 0,01%, par rapport au poids total de l'additif ;
x) un point d'écoulement inférieur ou égal à +6°C, de préférence inférieur ou égal à 0°C, de préférence inférieur ou égal à -3°C, de préférence inférieur ou égal à -6°C, de préférence inférieur ou égal à -9°C,de préférence inférieur ou égal à -12°C, de préférence inférieur ou égal à -15°C, de préférence inférieur ou égal à -18°C, selon la norme ASTM D 7346 ;
xi) une teneur en poids en stérols totaux (stérol(s) libre(s) et ester(s) de stérol(s)) d'au moins 6% , ou d'au moins 7% en poids, ou de préférence d'au moins 8% en poids, par rapport au poids total de l'additif.

Avantageusement, l'additif de lubrifiance présent dans la composition de carburant selon l'invention peut présenter la totalité des caractéristiques i) à xi) précédemment décrites ou une combinaison de deux ou plus de ces caractéristiques, par exemple : vii)+i), vii)+viii), vii)+viii)+ix), i)+ii)+iii), i)+ii), i)+ii)+vi), i)+ii)+v), i)+ii)+iv) i)+vii), i)+vii)+viii), i)+vii)+viii)+ix), etc...

Les acides gras libres de l'additif, selon l'invention, ont habituellement des chaînes carbonées en C₁₄-C₂₄, de préférence en C₁₆-C₂₀.

Les acides gras libres sont principalement les acides : myristique 14:0, palmitique 16:0, palmitoléique 16:1, stéarique 18:0, oléique 18:1, linoléique 18:2 (n-6), linolénique 18:3 (n-3), arachidique 20:0, gondoique 20:1, béhénique 22:0, érucique 22:1, lignocérique 24:0, nervonique 24:1.

Avantageusement, l'additif compris dans la composition de carburant selon l'invention comprend entre 75% à 94% en poids d'acides gras libres, entre 0 et 2% en poids de monoglycérides, entre 0 et 3% en poids de diglycérides, de 0 à 7% en poids de triglycérides, au moins 6% en poids, voire au moins 7% en poids de stérol(s) totaux. Ces teneurs sont exprimées par rapport au poids total de l'additif.

Dans un autre mode de réalisation, l'additif compris dans la composition de carburant selon l'invention comprend entre 75% à 92,999% en poids d'acides gras libres, entre 0,0005 et 2% en poids de monoglycérides, entre 0,0005 et 3% en poids de diglycérides, de 0 à 7% en poids de triglycérides, au moins 6% en poids, voire au moins 7% en poids de stérol(s) totaux, et au moins 1% en poids de tocophérol(s), voire 1,5% en poids, par rapport au poids total de l'additif.

Les acides gras présents dans l'additif selon l'invention peuvent être sous forme libre ou non libre. On désigne de manière connue en soi par acides gras non libres des acides gras liés de manière covalente à d'autres molécules, en particulier des acides gras estérifiés sous forme de mono-, di- ou tri-glycérides.

### Procédé d'obtention de l'additif par raffinage physique

Selon un mode de réalisation, l'additif de l'invention est issu d'un procédé de raffinage d'une ou plusieurs huiles végétale(s) et/ou animale(s), qui consiste en une distillation de ces huiles sans traitement chimique basique (sans ajout de base) et comprenant une étape de désodorisation, ci-après dénommée « raffinage physique » dans la présente demande.

Le raffinage physique des huiles végétales et/ou animales, c'est-à-dire la distillation de ces huiles brutes, principalement utilisée dans le cas d'huiles peu fluides/visqueuses (palme, palmiste...), permet d'en séparer les différents composants, notamment grâce à une étape de désodorisation: phospholipides, pigments, cires, acides gras libres et glycérides (mono, di- et tri-glycérides), lipides... Ce procédé est typiquement employé dans le traitement d'huiles destinées à l'alimentation humaine.

Les composés obtenus par cette distillation, considérés jusque-là comme des déchets, sont ainsi des mélanges de matières actives à faible coût de revient. La présente invention permet de valoriser avantageusement ces produits.

La demanderesse a découvert que l'on pouvait obtenir l'additif selon l'invention par un procédé de raffinage physique d'au moins une huile végétale et/ou animale. L'additif selon l'invention est ainsi issu uniquement de la biomasse et dorénavant valorisé, considéré jusqu'à présent comme un déchet de ces distillations.

Le raffinage physique comprend une étape de « désodorisation », qui permet d'éliminer tous les composés (volatils) impropres à l'alimentation : les acides gras libres, les stérols, les produits d'oxydation, les arômes/composés odorants désagréables, les colorants, les produits toxiques (pesticides, glycosides...), les phospholipides et autres impuretés tels que les métaux (fer, cuivre...). Ce raffinage physique est adapté aux huiles à basse teneur en phospholipides, peu fluides (palme, palmiste, coprah, suif, saindoux...) et comprenant plus de 3% en poids d'acides gras libres.

Typiquement, le procédé de raffinage physique ou « distillation neutralisante » des huiles brutes animales et/ou végétales comprend six étapes :
(a) la démucilagination ou dégommage,
(b) le lavage puis séchage,
(c) la décoloration,
(d) la filtration,
(e) la désodorisation,
(f) l'inertage.
   (a) La démucilagination ou dégommage : c'est un conditionnement acide avec de l'eau et un acide (phosphorique...) à 0,05-1% en poids, pour éliminer les composés susceptibles de devenir insolubles par hydratation, comme les phospholipides, les lipoprotéines... ou susceptibles d'être éliminés avec la phase aqueuse (glucides). Il y a une élimination de phospholipides par la formation de micelles, une hydratation rapide des phospholipides, puis l'élimination des phospholipides non hydratables par un traitement avec des acides.
   (b) Le lavage puis centrifugation : cette étape permet d'éliminer les dernières traces de métaux, de phospholipides et autres impuretés (produits d'oxydation polaires et certains contaminants). Le lavage est plus efficace lorsqu'il est effectué en deux stades, et l'eau de lavage doit être la plus chaude possible (90°C). L'humidité présente dans l'huile lavée est éliminée avant l'opération de décoloration car elle peut provoquer un colmatage rapide des filtres.
   (c) la décoloration : cette opération vise à éliminer les pigments de l'huile (chlorophylle et pigments caroténoïdes), nuisibles à sa couleur et à

sa conservation. Pendant cette étape, sont aussi adsorbés des produits primaires et secondaires d'oxydation, des métaux, des savons, des composés phosphatidiques et polyaromatiques ainsi que les tocophérols. À cet effet, l'huile préalablement chauffée au-dessus de 100°C et déshydratée, est traitée par du charbon activé ou autre adsorbant. Les agents décolorants utilisés sont :
- des terres décolorantes : terres naturelles ou terres à foulon (ou argile smectique) sont employées telles quelles car elles possèdent un pouvoir décolorant naturel. Ce sont des argiles plastiques qui sont en général simplement séchées et finement broyées pour accroître la surface de contact. Les études ont montré que leur activité est très bonne vis à vis des carotènes, des chlorophylles, des aldéhydes et des cétones,
- des charbons actifs : les charbons actifs renferment 95 à 98 % de charbon, et leur caractère spécifique provient de leur porosité. L'activation est conduite par voie chimique, sous l'action d'acides oxygénés peu volatils, d'acide phosphorique, du chlorure de zinc, de carbonates de potassium, ou par activation gazeuse par l'air, la vapeur ou le dioxyde de carbone (CO₂). Les charbons actifs permettent d'éliminer les hydrocarbures aromatiques polycycliques qui peuvent être présents en quantité non négligeable dans certaines huiles végétales.
   (d) la filtration : un décirage et une filtration permet d'éliminer les cires ainsi que les terres décolorantes. L'enlèvement total de la terre décolorante de l'huile par filtration est très important car le résidu d'argile agit en tant qu'oxydant puissant et salit le matériel en aval. Les filtres habituellement utilisés après décoloration mettent en oeuvre des surfaces filtrantes constituées le plus souvent de toiles métalliques (exemple: filtre Niagara lorsqu'il s'agit d'installation continue).
   (e) la désodorisation : comme son nom l'indique, elle a pour but d'éliminer les substances volatiles comme les aldéhydes et les cétones, qui donnent une odeur et une saveur désagréables à l'huile, ainsi que les acides gras libres encore présents dont certains sont très sensibles à l'oxydation.

C'est une opération de stripping (entraînement de gaz ou produits volatils dissous dans l'eau par l'action d'un autre gaz, en réalisant une désorption) /distillation, avec entraînement par vapeur d'eau, injectée à basse pression (sous vide) et à haute température pour vaporiser/évaporer les acides gras libres : en effet, lors du raffinage physique, les acides gras ne sont pas éliminés par neutralisation contrairement au raffinage chimique. Cette opération consiste à distiller l'huile avec injection de vapeur sèche (de 180 à 260°C, de préférence 230-250°C, ou une distillation « flash » : 260°C), sous vide (1-10 mbar, de préférence 1-2 mbar). Cette étape permet d'éviter l'oxydation de l'huile et de récupérer les acides gras libres, les composés volatils, des hydroperoxydes, contaminants (pesticides, aromatiques polycycliques légers...),... et les insaponifiables (tocophérols, stérols, esters de stérols...).

Un chauffage prolongé à température élevée doit être évité, car il risque de provoquer une polymérisation. En outre, l'absence d'air est impérative, on ajoute parfois des antioxydants ainsi que certains sels (citrates, phosphates, tartrates) qui complexent les traces de métaux de cuivre et de fer, pouvant être présents.

La distillation peut être continue, semi-continue ou fractionnée, avec différentes sortes de colonnes : horizontale, verticale, à plateaux, sur colonne à garnissage...

En continu, elle est réalisée dans des tours cylindriques où l'huile entre par la partie supérieure et descend par une série de disques, ou bien de colonnes, où circule le gaz d'entraînement à contre-courant, de bas en haut. Ce processus présente une économie considérable de vapeur et de calories en utilisant l'huile chaude qui sort par la partie inférieure de la colonne pour chauffer l'huile décolorée qui pénètre par la partie supérieure.
(f) Enfin, l'inertage permet de récupérer une huile raffinée, issue du raffinage « physique » de ces huiles : à l'aide d'azote gazeux, dioxyde de carbone, argon, par exemple, pour prévenir l'oxydation de l'huile.

Le procédé de raffinage physique a les avantages de consommer peu d'eau, peu de produits chimiques, être simple à mettre en oeuvre, de donner une bonne stabilité aux produits isolés, et d'avoir un rendement supérieur au procédé de raffinage chimique.

### Procédé de raffinage chimique, comparatif

Un procédé de raffinage chimique classique comprend les étapes suivantes :
- démucilagination ou dégommage : élimination des mucilages (substances végétales, constituées de polysaccharides) à l'eau ou par des solutions acides (acides phosphorique ou citrique),
- neutralisation : neutralisation des acides gras libres en ajoutant une composition basique, notamment une solution d'hydroxyde de sodium.

L'huile sort de la turbine de démucilagination à 60°C - 80°C et passe dans un échangeur à plaques qui élève la température jusqu'à environ 90°C. La solution neutralisante est alors injectée par un système de pompe doseuse. La quantité de soude est généralement en léger excès, de 5 à 10 % au-dessus de la quantité calculée pour la neutralisation complète des acides gras libres et de l'acide phosphorique présent dans l'huile. Le mélange d'huile et de soude passe dans un mélangeur rapide ou un mélangeur statique avant d'être envoyé vers la centrifugeuse destinée à séparer les pâtes de neutralisation.

### Avantages du raffinage physique

Le raffinage physique permet d'obtenir des composés volatils et des acides gras libres grâce à une désodorisation, à haute température et basse pression. La totalité des acides gras libres sont séparés pendant la désodorisation grâce à de la vapeur, sous haute pression : c'est ce qui différencie, en premier lieu, les additifs obtenus par ce raffinage physique des produits obtenus par le raffinage chimique de ces huiles, par lequel la majorité des acides gras libres sont séparés par neutralisation à la soude (donnant les pâtes de neutralisation qui peuvent ensuite être acidifiées pour donner des huiles acides).

De plus, de par l'utilisation de ce procédé particulier de raffinage physique, les additifs obtenus contiennent une quantité d'acides gras libres supérieure (plus de 70% en poids) comparé à la quantité de produit obtenu par raffinage chimique des huiles (30-50% en poids en général pour le raffinage chimique) et une quantité en stérol(s) supérieure.

Le produit obtenu par raffinage physique comme décrit ci-avant est donc différent d'un produit qui serait obtenu par raffinage chimique d'une même huile de départ.

Dans un mode de réalisation, l'additif selon l'invention peut être ainsi la fraction volatile obtenue lors d'une étape de désodorisation du raffinage physique d'une huile.

L'additif est constitué d'acides gras libres et de mono- et di-glycérides (triglycérides dégradés, esters du glycérol), de stérols libres, esters de stérols et tocophérols (vitamine E : α-tocophérol, β-tocophérol, γ-tocophérol, δ-tocophérol) (insaponifiables).

Les mono- et di-glycérides, glycérides partiels, sont des esters du glycérol.

Les stérols sont des lipides possédant un noyau stérane dont le carbone 3 est porteur d'un groupe hydroxyle, ce sont une sous-classe des stéroïdes, présents dans certains végétaux.

Le procédé préféré permettant d'obtenir l'additif selon l'invention comprend de préférence les étapes a) à e) précédemment décrite.

Les échappées de désodorisation récupérées à l'étape e), présentent généralement une teneur en eau inférieure ou égale à 1% en poids, de préférence inférieure ou égale à 0,5% en poids, de préférence inférieure ou égale à 0,3% en poids, par rapport au poids total de la composition.

La distillation s'effectue à une température comprise entre 220°C et 280°C de préférence sous vide poussé, de préférence entre 230°C et 260°C de préférence sous vide poussé, de préférence entre 230°C et 250°C de préférence sous vide poussé, de préférence à 260°C de préférence sous vide poussé.

Selon ce mode de réalisation, les additifs de l'invention sont donc des produits issus de la biomasse. Des avantages associés à de tels additifs résident, d'une part, sur leur bas coût de mise en oeuvre, et, d'autre part, dans l'absence de substances toxiques indésirables, telles que les pesticides, les aflatoxines, les métaux lourds, les précurseurs de dioxines et furanes, les PCB (polychlorobiphényles) et les nitrites.

### L'huile végétale et/ou animale utilisée dans le procédé de raffinage physique

Lorsque l'additif est issu d'un procédé de raffinage physique d'une huile, l'huile de départ est un produit organique, lipidique, insoluble dans l'eau et soluble dans les solvants organiques (plutôt apolaires), contenant moins de 0,1% en poids d'eau.

Les huiles typiquement sont constituées de 95 à 99% en poids de triglycérides (a)' (dont 90-95% d'acides gras, et 3-5% de glycérol), et de constituants naturels en quantité minoritaire : phytostérols, tocophérols, phospholipides qui sont eux-mêmes constitués de deux sortes de composés, appelés les insaponifiables (b') (0,1-3% en poids) et les lipides polaires (c') (0,1-0,2% en poids) :
- (a') Les acides gras libres peuvent être obtenus par distillation d'au moins une huile végétale et/ou animale, telle que, sans être limitatif, une huile de tournesol, de soja, de colza, de lin, de palme, de palmiste, de cocotier (coprah), de cacao, de coton, d'arachide, d'olive, de noix, de raisins, de maïs, de blé, une huile de poisson, du suif de boeuf, du saindoux, de la graisse de canard...
- (b)' Cinq grands groupes de substances sont présents dans la plupart des insaponifiables d'huiles végétales et/ou animales : hydrocarbures saturés ou insaturés, alcools aliphatiques (alcools gras...) ou terpéniques, stérols, tocophérols, squalène, alcools terpéniques, pigments caroténoïdes (carotènes...) et xanthophiles. Les insaponifiables sont des composés qui constituent la fraction d'un corps gras qui, après action prolongée d'une base alcaline (potasse par exemple), reste insoluble dans l'eau et peut être extraite par un solvant organique.
- (c') Les lipides polaires comprennent, quant à eux, des phospholipides, des glycolipides, des sphyngolipides...

Des produits de dégradation (oxydation, hydrolyse, dégradation thermique), des contaminants (métaux, phytosanitaires, dioxines, hydrocarbures aliphatiques polycycliques (HAP), solvants...) et des indésirables (eau, impuretés, protéines...) sont également présents dans les huiles, en quantités négligeables.

Ces huiles végétales et/ou animales, comprennent classiquement en très grande majorité des chaînes carbonées en C₁₆-C₁₈, saturées ou insaturées, parmi lesquelles de préférence des chaînes carbonées insaturées en C₁₈, mais également en quantité plus minoritaire des chaînes en C₂₀-C₂₄, C₁₀-C₁₄ voire C₄-C₈. Les huiles végétales comprennent habituellement de l'acide palmitique, stéarique, oléique, linoléique, linolénique, et d'autres acides en plus faibles quantités (caprylique, butyrique, laurique, palmitoléique, arachidique, béhénique, gadoléique....).

L'huile brute animale et/ou végétale traitée à l'étape a) du raffinage peut être un mélange de différentes huiles végétales et/ou animales.

Selon un mode de réalisation préféré, l'additif selon l'invention est uniquement issu d'une ou plusieurs huiles végétales. Autrement dit, il est directement issu d'une distillation d'au moins une huile végétale.

### La composition de carburant

La présente invention a notamment pour objet une composition de carburant comprenant :
(1) au moins une coupe d'hydrocarbures liquide issue d'une ou de plusieurs sources choisies parmi le groupe consistant en les sources minérales, animales, végétales et synthétiques, et
(2) de 1 à 10 000 ppm en poids d'un additif qui comprend au moins 6% en poids de stérols libres et/ou esters de stérols par rapport au poids total de l'additif et de 70% à 94% en poids, par rapport au poids total de l'additif, d'acides gras libres.

On choisira, de préférence, le pétrole comme source minérale.

La coupe d'hydrocarbures liquide est avantageusement choisie parmi les carburants hydrocarbonés et les carburants non essentiellement hydrocarbonés, seuls ou en mélange.

On entend par carburant hydrocarboné, un carburant constitué d'un ou de plusieurs composés constitués uniquement de carbone et d'hydrogène. Les essences et les gazoles (également appelé carburant Diesel) sont des carburants hydrocarbonés.

On entend par carburant non essentiellement hydrocarboné, un carburant constitué d'un ou de plusieurs composés constitués non essentiellement de carbone et d'hydrogène c'est- à-dire qui contiennent également d'autres atomes, en particulier des atomes d'oxygène.

Selon un mode de réalisation particulier, la composition de carburant peut comprendre au moins un carburant hydrocarboné choisi parmi les distillats moyens de température d'ébullition comprise entre 100 et 500°C, de préférence 150 à 450°C, de préférence 190 à 400°C, de préférence 210 à 350°C, de préférence 220 à 330°C, ou les distillats plus légers ayant une température d'ébullition comprise entre 50 et 210°C, des distillats plus légers pouvant être transformés (ou non) dans des unités de conversion telles que (mais non limitées à): le réformage catalytique, l'isomérisation ou le craquage catalytique et constituant la gamme des essences.

Ces distillats moyens peuvent, par exemple, être choisis parmi les distillats obtenus par distillation directe d'hydrocarbures bruts, les distillats sous vide, les distillats hydrotraités, des distillats issus du craquage catalytique et/ou de l'hydrocraquage de distillats sous vide, les distillats résultant de procédés de conversion type ARDS (par désulfuration de résidu atmosphérique).

La composition de carburants/carburant peut comprendre au moins un carburant hydrocarboné liquide choisi parmi les gazoles, les carburants diesel, les essences, les biocarburants, les carburants jet, les fiouls domestiques (FOD) et les fiouls lourds, de préférence les gazoles (ou carburants diesel), ou les essences.

Les carburants hydrocarbonés sont typiquement les essences et les gazoles (également appelé carburant Diesel).

Avantageusement, la coupe d'hydrocarbures liquide est choisie parmi les essences et les gazoles.

Les carburants peuvent également contenir de nouvelles sources de distillats, parmi lesquelles on peut notamment citer :
- les coupes les plus lourdes issues des procédés de craquage et de viscoréduction concentrées en paraffines lourdes, comprenant plus de 18 atomes de carbone,
- les distillats synthétiques issus de la transformation du gaz tels que ceux issus du procédé Fischer Tropsch,

- les distillats synthétiques résultant du traitement de la biomasse d'origine végétale et/ou animale, comme notamment le BTL (acronyme du terme anglais *biomass to liquid*) de la biomasse végétale et/ou animale, et/ou leurs mélanges (carburant non essentiellement hydrocarboné),
- les huiles végétales et/ou animales et/ou leurs esters, de préférence, les esters méthyliques d'acides gras (EMAG) ou éthyliques d'acides gras (EEAG), en particulier des esters méthyliques d'huiles végétales (EMHV) ou esters éthyliques d'huiles végétales (EEHV) (carburant non essentiellement hydrocarboné),
- les huiles végétales et/ou animales hydrotraitées (HVO) et/ou hydrocraquées et/ou hydrodéoxygénées (HDO) (carburant non essentiellement hydrocarboné),
- les biodiesels d'origine animale et/ou végétale (carburant non essentiellement hydrocarboné).

Plus précisément, les gazoles (carburants Diesel) comprennent, en particulier, toutes compositions de carburant pour moteur Diesel disponibles dans le commerce. On peut citer, à titre d'exemple représentatif, les gazoles répondant à la norme NF EN 590.

Les essences comprennent, en particulier, toutes compositions de carburant pour moteur par allumage commandé disponibles dans le commerce. On peut citer à titre d'exemple représentatif, les essences répondant à la norme NF EN 228. Les essences ont généralement des indices d'octane suffisamment élevés pour éviter le phénomène de cliquetis. Typiquement, les carburants de type essence commercialisés en Europe, conformes à la norme NF EN 228 ont un indice d'octane moteur (MON en anglais « Motor Octane Number ») supérieur à 85 et un indice d'octane recherche (RON en anglais « Research Octane Number ») d'un minimum de 95. Les carburants de type essence ont, généralement, un RON allant de 90 à 100 et un MON allant de 80 à 90, les RON et MON étant mesurés selon la norme ASTM D 2699-86 ou D 2700-86.

Le carburant peut également être un mélange de carburant hydrocarboné et de carburant non essentiellement hydrocarboné, qui sont typiquement les gazoles de type Bx et les essences de type Ex.

On entend par gazole de type Bx pour moteur Diesel, un carburant gazole qui contient x% (v/v) de biocarburants, en général des esters d'huiles végétales ou animale (y compris huiles de cuisson usagées) transformés par un procédé chimique appelé transestérification, obtenu en faisant réagir cette huile avec un alcool afin d'obtenir des esters d'acide gras (EAG). Avec le méthanol et l'éthanol, on obtient, respectivement, des esters méthyliques d'acides gras (EMAG) et des esters éthyliques d'acides gras (EEAG). La lettre "B" suivie par un nombre indique le pourcentage d'EAG contenu dans le gazole. Par exemple, un B99 contient 99% de EAG et 1 % de distillats moyens d'origine fossile (source minérale), le B20, 20% de EAG et 80% de distillats moyens d'origine fossile etc.... On distingue donc les gazoles de type B0 qui ne contiennent pas de composés oxygénés, des gazoles de type Bx qui peuvent en contenir si le biocarburant utilisé est un ester d'huiles végétales ou d'acides gras, le plus souvent esters méthyliques (EMHV ou EMAG). Lorsque l'EAG est utilisé seul dans les moteurs, on désigne le carburant par le terme B 100.

On entend par essence de type Ex pour moteur par allumage commandé, un carburant essence qui contient x% (v/v) d'oxygénés, généralement de l'éthanol, du bioéthanol et/ou l'éthyl-tertio-butyl-éther (ETBE).

La composition de carburant peut comprendre uniquement des nouvelles sources de distillats (qui comprennent en général, pour les gazoles, de longues chaînes paraffiniques supérieures ou égales à 10 atomes de carbone et préférentiellement de C₁₄ à C₃₀) ou être composée d'un mélange avec des distillats moyens pétroliers classiques comme base carburant type diesel ou d'un mélange avec des distillats plus légers pétroliers classiques comme base carburant type essence. Ces nouvelles sources de

L'additif selon l'invention est de préférence présent en faible quantité dans la composition de carburant selon l'invention, en une teneur suffisante pour produire un effet lubrifiant.

De préférence, la composition de carburant comprend le ou les additif(s) de selon l'invention en une teneur minimale de 5 ppm en poids, par rapport au poids total de la composition de carburant.

De préférence, la teneur de l'additif s'étend de 5 à 10 000 ppm en poids, de préférence de 10 à 1000 ppm en poids, plus préférentiellement de 25 à 500 ppm en poids, et mieux encore de 150 à 250 ppm en poids, par rapport au poids total de la composition de carburant.

De préférence, la teneur en soufre dans la composition de carburant est inférieure ou égale à 500 ppm en poids, et préférentiellement inférieure ou égale à 50 ppm en poids, encore plus préférentiellement inférieure ou égale à 10 ppm en poids, par rapport au poids total de la composition, et avantageusement sans soufre.

### Additifs de la composition de carburant

La composition de carburant peut également comprendre un ou plusieurs additif(s) additionnel(s), différent(s) desdits additifs selon l'invention.

Ce ou ces additifs additionnel(s) peuvent par exemple être choisis, de manière non limitative, parmi : les additifs détergents, les agents anticorrosion, les dispersants, les désémulsifiants, les agents anti-mousse, les biocides, les réodorants, les additifs procétane, les modificateurs de friction, les additifs de lubrifiance ou additifs d'onctuosité, les agents d'aide à la combustion (promoteurs catalytiques de combustion et de suie), les additifs de tenue à froid et notamment les agents améliorant le point de trouble, le point d'écoulement, la TLF («Température limite de filtrabilité»), les agents anti-sédimentation, les agents anti-usure et les agents modifiant la conductivité.

Ce ou ces additifs additionnel(s) sont plus préférentiellement choisis parmi :
a) les additifs procétane, notamment (mais non limitativement) choisis parmi les nitrates d'alkyle, de préférence le nitrate de 2-éthyl hexyle, les peroxydes d'aryle, de préférence le peroxyde de benzyle, et les peroxydes d'alkyle, de préférence le peroxyde de ter-butyle ;
b) les additifs anti-mousse, notamment (mais non limitativement) choisis parmi les polysiloxanes, les polysiloxanes oxyalkylés, et les amides d'acides gras issus d'huiles végétales ou animales. Des exemples de tels additifs sont donnés dans EP861882, EP663000, EP736590 ;
c) Les additifs fluidifiants à froid (CFI en anglais « Cold Flow Improver ») choisis parmi les copolymères d'éthylène et d'ester insaturé, tels que copolymères éthylène/acétate de vinyle (EVA), éthylène/propionate de vinyle (EVP), éthylène/éthanoate de vinyle (EVE), éthylène/méthacrylate de méthyle (EMMA), et éthylène/fumarate d'alkyle décrits, par exemple, dans les documents US3048479, US3627838, US3790359, US3961961 et EP261957 ;
d) les additifs de lubrifiance ou agents anti-usure, notamment (mais non limitativement) choisis dans le groupe constitué par les acides gras et leurs dérivés ester ou amide, notamment le monooléate de glycérol, et les dérivés d'acides carboxyliques mono- et polycycliques. Des exemples de tels additifs sont donnés dans les documents suivants : EP680506, EP860494, WO98/04656, EP915944, FR2772783, FR2772784;
e) les additifs de point de trouble, notamment (mais non limitativement) choisis dans le groupe constitué par les terpolymères oléfine à chaîne longue/ester (méth)acrylique /maléimide, et les polymères d'esters d'acides fumarique /maléique. Des exemples de tels additifs sont donnés dans FR2528051, FR2528051, FR2528423, EP112195, EP172758, EP271385, EP291367;
f) les additifs détergents notamment (mais non limitativement) choisis dans le groupe constitué par les succinimides, les polyétheramines et les sels d'ammonium quaternaire; par exemple ceux décrits dans les documents US4171959 et WO2006135881;
g) les additifs polyfonctionnels d'opérabilité à froid choisis dans le groupe constitué par les polymères à base d'oléfine et de nitrate d'alkényle tels que décrits dans EP573490.

Ces additifs additionnels peuvent être présents en quantité allant de 10 à 1 000 ppm (chacun).

### Les utilisations

Un autre objet de l'invention est l'utilisation pour améliorer les propriétés de lubrifiance d'un carburant moteur d'un additif qui comprend au moins 6% en poids d'un ou plusieurs composés choisis parmi les stérols libres et/ou les esters de stérols par rapport au poids total de l'additif et de 70% à 94% en poids, par rapport au poids total de l'additif, d'acides gras libres.

Les propriétés de lubrifiance d'un additif sont définies selon la norme ISO 12156-1 pour les diesels. Cette norme peut être utilisée pour les essences avec utilisation d'un kit adapté.

Avantageusement, la teneur de la composition de carburant en additif est suffisante pour que la composition de carburants présente un pouvoir lubrifiant inférieur ou égal à 460 µm, de préférence inférieur ou égal à 430 µm, préférentiellement inférieur ou égal à 397 µm, dans les conditions de l'essai HFRR (« High Frequency Reciprocating Rig ») tel que décrit dans l'article SAE 932692 par J.W. HADLEY de l'université de Liverpool ou dans la norme ISO 12156-1 pour le diesel norme que l'on peut appliquer à l'essence.

De préférence, l'additif est tel que défini précédemment selon les caractéristiques i) à xi) et dans le paragraphe « additif ».

Avantageusement, l'additif de lubrifiance de carburant pour moteur, contient entre 70% à 92,999% en poids d'acides gras libres, entre 0,0005 et 2% en poids de monoglycérides, entre 0,0005 et 3% en poids de diglycérides, de 0 à 7% en poids de triglycérides, au moins 6% en poids, voire au moins 7% en poids de stérol(s), et au moins 1% en poids, voire 1.5% en poids, de tocophérol(s), par rapport au poids total de l'additif.

Selon un mode de réalisation, cet additif est issu d'un procédé de raffinage d'une ou plusieurs huiles végétale(s) et/ou animale(s).

De préférence, la teneur en additif dans la composition de carburant s'étend de 5 à 10 000 ppm en poids, de préférence de 10 à 1000 ppm en poids, plus préférentiellement de 25 à 500 ppm en poids, et mieux encore de 150 à 250 ppm en poids, par rapport au poids total de la composition de carburant.

De préférence, l'additif est utilisé dans une composition de carburant diesel, ayant de préférence une teneur en soufre inférieure ou égale à 50 ppm, voire 10 ppm, en poids par rapport au poids total de la composition, avantageusement sans soufre.

### Procédé de préparation de la composition de carburant

La composition de carburant selon l'invention peut être préparée selon tout procédé connu, en additivant une coupe d'hydrocarbures liquide telle que décrite précédemment avec au moins un additif tel que décrit ci-dessus, et éventuellement un ou plusieurs autres additifs différents de l'additif selon l'invention, tels que décrits précédemment.

Avantageusement, avant son utilisation et mélange avec une composition de carburant, l'additif peut subir une ou plusieurs étapes de traitement choisies parmi une centrifugation, une filtration, une précipitation. Notamment, une étape de centrifugation peut permettre d'obtenir une teneur en eau inférieure ou égale à 1% en poids, voire inférieure ou égale à 0,8% en poids, en particulier de 0,1% à 0,7% en poids.

Outre l'élimination d'eau, récupérée dans une phase aqueuse, la centrifugation peut également permettre l'élimination d'une partie des résidus solides en suspension.

### Procédé pour améliorer la lubrifiance

L'invention concerne également un procédé pour améliorer la lubrifiance d'une composition de carburants de moteur à combustion interne comprenant une étape au cours de laquelle on ajoute à une composition de carburants au moins un additif tel que décrit ci-avant, qui peut être obtenu, dans un mode de réalisation, via un procédé de raffinage physique, préférentiellement une distillation, qui peut être sous vide, d'au moins une huile végétale et/ou animale. La teneur en additif de lubrifiance de la composition de carburants peut être telle que précisée ci-dessus.

Pour expliciter les avantages de la présente invention, des exemples sont donnés ci-après à titre illustratif mais non limitatif de la portée de l'invention.

### EXEMPLES

Les notations suivantes sont utilisées :
A1 et A2 : additifs issus du raffinage physique d'huile de soja
AG : acides gras libres
MG : mono-glycérides
DG : di-glycérides
TG : triglycérides
HA : huile acide
TOFA : de l'anglais "tall oil of fatty acid": huile de tall
Cx :y, acide gras présentant x atomes de carbone et y insaturations (doubles liaisons carbone-carbone).

Le pouvoir lubrifiant de plusieurs additifs dans un carburant de type gazole pour moteur diesel a été testé dans les conditions de l'essai HFRR (« High Frequency Reciprocating Rig ») tel que décrit dans l'article SAE 932692 par J.W. HADLEY de l'université de Liverpool ou la norme ISO 12156-1. Cette norme peut être utilisée pour les essences avec utilisation d'un kit adapté.

Ce pouvoir lubrifiant peut ainsi être défini comme la propriété d'un liquide déterminée en mesurant la marque d'usure produite par le contact d'une bille oscillante sur une plaque fixe immergée dans le liquide et dans des conditions étroitement contrôlées.

Le test consiste à imposer conjointement à une bille d'acier en contact avec un plateau métallique immobile, une pression correspondant à un poids de 200g et un déplacement alternatif de 1mm à une fréquence de 50Hz. La bille en mouvement est lubrifiée par la composition à tester. La température est maintenue à 60°C (pour les gazoles et 25°C pour les essences) pendant toute la durée de l'essai, c'est-à-dire 75 minutes. Le pouvoir lubrifiant est exprimé par la valeur moyenne des diamètres de l'empreinte d'usure de la bille sur le plateau. Plus le diamètre d'usure est faible, meilleur est le pouvoir lubrifiant. Généralement un diamètre d'usure inférieur ou égal à 460 µm ± 63µm est requis pour un carburant de type gazole.

On considère qu'un lubrifiant est meilleur qu'un autre et a donc des propriétés lubrifiantes améliorées quand l'écart HFRR est au moins de 63 µm, selon la norme ISO12156-1.

Les caractéristiques du gazole testé sont rassemblées dans le tableau 1 ci-dessous.

**Table 1]**

| | Gazole | Norme | Unité |
|---|---|---|---|
| Viscosité cinématique à 40°C (VC40) | 33,04 | NF EN 3104 | mm²/s |
| Température Limite de Filtrabilité | -15 | NF EN 116 | °C |
| Point de trouble | -15 | ASTM D7689 | °C |
| Masse volumique à 15°C | 823,7 | NF EN ISO12185 | kg/m³ |
| Teneur en Soufre | <3,0 | EN ISO20846 EN ISO20884 | mg/kg |
| Indice d'acide | <0,01 | NF ISO 6618 | mgKOH/g |
| Teneur en aromatiques | 14,1 | GCxGC | % |
| Teneur en polyaromatiques | 1,2 | GCxGC | % |
| Indice de cétane mesuré | 57,8 | ASTM D613 | NF |
| Indice de cétane calculé | 64,6 | ISO 4264 | NF |
| Point éclair | 102 | ASTM D93 | °C |
| Teneur en eau | 22 | ASTM E1064 | mg/kg |
| HFRR | 636 | ISO 12156-1 | µm |
| Distillation | | ASTM D86 | °C |
| 0% | 227,0 | | |
| 5% | 241,9 | | |
| 10% | 247,7 | | |
| 20% | 257,0 | | |
| 30% | 265,8 | | |
| 40% | 274,5 | | |
| 50% | 283,0 | | |
| 60% | 290,4 | | |
| 70% | 297,7 | | |
| 80% | 305,5 | | |
| 85% | 310,0 | | |
| 90% | 315,5 | | |
| 95% | 324,1 | | |
| 100% | 328,8 | | |

Différents additifs, ci-après dénommés A1, A2, TOFA et HA, ont été ajoutés à ce gazole en une teneur de 200 ppm en poids, et un test HFRR a été mis en oeuvre pour chaque additif afin de déterminer son pouvoir lubrifiant.

Les additifs A1 et A2 sont conformes à l'invention et sont directement issus d'un procédé de raffinage physique d'huiles végétales de soja. L'additif TOFA (comparatif 1) est obtenu de manière classique par simple distillation de l'huile de tall (tall oil).

L'additif HA (comparatif 2) est obtenu à partir d'une huile de colza, par traitement par une solution basique (neutralisation), extraction de la pâte de neutralisation contenant les esters et ré-acidification de celle-ci pour obtenir les acides gras libres.

Le tableau 2 ci-dessous détaille la composition des additifs A1 et A2, ainsi des exemples comparatifs TOFA et HA. Le tableau 3 indique leur composition détaillée en acides gras, ainsi que leur point d'écoulement.

**Table 2]**

| | A1 | A2 | TOFA | HA |
|---|---|---|---|---|
| AG libres totaux (% poids) | 75,9 | 70,4 | 95,8 | 54,7 |
| MG (% poids) | 0,8 | 2,3 | | 0 |
| DG (% poids) | 1,7 | 8,5 | | 11,2 |
| TG (% poids) | 7 | 8 | | 31,9 |
| Stérols | 4,8 | 4,6 | | |
| Esters de stérols | 2,4 | 2,1 | | 2,2 |
| Tocophérols | 2,8 | 2 | | |
| Autres composés non identifiés | 4,6 | 2,1 | 4,2 | |

**Table 3]**

| | A1 | A2 | TOFA | HA |
|---|---|---|---|---|
| Acide myristique 14:0 | 0,3 | 0,4 | | 4,89 |
| Acide pentadécylique 15:0 | | | | |
| Acide palmitique 16 :0 | 8,1 | 8,0 | 0,2 | 5,35 |
| Acide palmitoléique 16 :1 | 0,7 | 0,7 | 0,1 | 0,17 |
| Acide margarique 17 :1 | 0,1 | 0,1 | | |
| Acide stéarique 18 :0 | 3 | 3,4 | 1,6 | 1,1 |
| Acide oléique 18 :1 | 59,1 | 57,3 | 28,5 | 21,4 |
| Acide 18 :2 trans | 0,2 | 0,3 | | 0,46 |
| Acide linoléique 18 :2 (n-6) | 19,1 | 20,7 | 44,4 | 11,09 |
| Acide 18 :3 trans | 0,3 | 0,3 | 1,0 | 0,73 |
| Acide linolénique 18 :3 (n-3) | 7,2 | 6,8 | 7,7 | 2,05 |
| Acide arachidique 20 :0 | 0,7 | 0,7 | 0,3 | 0,6 |
| Acide gondoique 20 :1 | 0,8 | 0,9 | 1,0 | 3,45 |
| Acide béhénique 22 :0 | 0,2 | 0,2 | 0,2 | 2,0 |
| Acide érucique 22 :1 | 0,1 | 0,1 | 0,1 | 41,75 |
| Acide lignocérique 24 :0 | 0,1 | 0,1 | 0,1 | 1,85 |
| Acide nervonique 24 :1 | | | 0,1 | 2,14 |
| Point d'écoulement (°C) (norme ASTM D7346) | -15 | -15 | -12 | +3 |
| VC 40°C (mm²/s) (norme NF EN 3104) | 20 | 20 | 17 | 30 |

Les résultats du test de lubrifiance sont rassemblés dans le tableau 4 ci-après.

Les valeurs indiquées correspondent à la moyenne des résultats obtenus, lesquels sont compris dans un intervalle de ±10µm.

**[Table 4]**

| Taux de traitement (mg/kg ou ppm) | TOFA | HA | A1 | A2 |
|---|---|---|---|---|
| 0 | 615 | 615 | 615 | 615 |
| 200 | 423 | 485 | 416 | 403 |

Ces résultats démontrent que l'incorporation dans la composition de carburant des additif A1 ou A2 selon l'invention permet d'atteindre la cible de 460 µm. La performance technique est très supérieure à celle de l'huile acide HA utilisée à titre de comparaison.

De plus, les additifs A1 et A2 selon l'invention sont ceux qui présentent le point d'écoulement le plus bas, ce qui garantit une meilleure stabilité à basse température de la composition de carburant les contenant.

## Revendications

1. Composition de carburant pour moteur comprenant:
(1) au moins une coupe d'hydrocarbures liquide issue d'une ou de plusieurs sources choisies parmi le groupe consistant en les sources minérales, animales, végétales et synthétiques, et
(2) de 1 à 10 000 ppm en poids d'un additif qui comprend au moins 6% en poids, par rapport au poids total de l'additif, d'un ou plusieurs composés choisis parmi les stérols libres et/ou les esters de stérols et de 70% à 94% en poids, par rapport au poids total de l'additif, d'acides gras libres.

2. Composition selon la revendication 1, dans laquelle l'additif comprend au moins 2% en poids d'ester(s) de stérol(s) et au moins 4% en poids de stérol(s) libre(s) par rapport au poids total de l'additif.

3. Composition selon l'une des revendications 1 ou 2, dans laquelle l'additif comprend au moins 80% en poids d'acides gras libres par rapport au poids total de l'additif.

4. Composition selon l'une quelconque des revendications 1 à 3, dans laquelle l'additif a un point d'écoulement inférieur ou égal à 0°C, de préférence inférieur ou égal à -3°C, de préférence inférieur ou égal à -6°C, de préférence inférieur ou égal à -9°C, de préférence inférieur ou égal à -12°C, de préférence inférieur ou égal à -15°C, selon la norme ASTM D7346.

5. Composition selon l'une quelconque des revendications 1 à 4, dans laquelle l'additif comprend une teneur en tocophérol(s) d'au moins 1% en poids, de préférence d'au moins 2% en poids, plus préférentiellement d'au moins 2,5% en poids, et mieux encore d'au moins 2,8% en poids, par rapport au poids total de l'additif.

6. Composition selon l'une quelconque des revendications 1 à 5, dans laquelle la teneur de l'additif en triglycérides est comprise dans la gamme allant de 0 à 13% en poids, par rapport au poids total de l'additif.

7. Composition selon l'une quelconque des revendications 1 à 6, dans laquelle la coupe d'hydrocarbures liquide (1) est choisie parmi les essences et les gazoles.

8. Composition selon l'une quelconque des revendications 1 à 7, dans laquelle la teneur de l'additif (2) va de 5 à 10 000 ppm en poids, de préférence de 10 à 1000 ppm en poids, plus préférentiellement de 25 à 500 ppm en poids, et mieux encore de 150 à 250 ppm en poids, par rapport au poids total de la composition de carburant.

9. Composition selon l'une quelconque des revendications 1 à 8, dans laquelle la teneur en soufre est inférieure ou égale à 500 ppm en poids, plus préférentiellement inférieure ou égale à 50 ppm en poids, et encore plus préférentiellement inférieure ou égale à 10 ppm en poids, par rapport au poids total de la composition de carburant.

10. Utilisation pour améliorer les propriétés de lubrifiance d'un carburant d'un additif qui comprend au moins 6% en poids, par rapport au poids total de l'additif, d'un ou plusieurs composés choisis parmi les stérols libres et/ou les esters de stérols et de 70% à 94% en poids, par rapport au poids total de l'additif, d'acides gras libres.

11. Utilisation selon la revendication 10, **caractérisée en ce que** l'additif est tel que défini dans l'une quelconque des revendications 2 à 6.

12. Utilisation selon l'une des revendications 10 ou 11, dans laquelle la teneur en additif va de 5 à 10 000 ppm en poids, de préférence de 10 à 1000 ppm en poids, plus préférentiellement de 25 à 500 ppm en poids, et mieux encore de 150 à 250 ppm en poids, par rapport au poids total de la composition de carburant.

13. Utilisation selon l'une des revendications 10 à 12, dans laquelle l'additif est utilisé dans une composition de carburant diesel ayant une teneur en soufre inférieure ou égale à 50 ppm en poids par rapport au poids total de la composition.

## Patentansprüche

1. Kraftstoffzusammensetzung für einen Motor, Folgendes umfassend:
(1) mindestens eine flüssige Kohlenwasserstofffraktion aus einer oder mehreren Quellen, ausgewählt aus der Gruppe bestehend aus mineralischen, tierischen, pflanzlichen und synthetischen Quellen, und
(2) 1 bis 10.000 Gew.-ppm eines Additivs, das mindestens 6 Gew.-% bezogen auf das Gesamtgewicht des Additivs an einem oder mehreren Bestandteilen, ausgewählt aus freien Steroiden und/oder Steroidestern, und 70 bis 94 Gew.-% bezogen auf das Gesamtgewicht des Zusatzstoffes an freien Fettsäuren umfasst.

2. Zusammensetzung nach Anspruch 1, wobei das Additiv mindestens 2 Gew.-% Steroidester(n) und mindestens 4 Gew.-% freie/s Steroid(e) bezogen auf das Gesamtgewicht des Additivs umfasst.

3. Zusammensetzung nach einem der Ansprüche 1 oder 2, wobei das Additiv mindestens 80 Gew.-% freie Fettsäuren bezogen auf das Gesamtgewicht des Zusatzstoffs umfasst.

4. Zusammensetzung nach einem der Ansprüche 1 bis 3, wobei das Additiv einen Stockpunkt von weniger als oder gleich 0°C, vorzugsweise weniger als oder gleich -3°C, vorzugsweise weniger als oder gleich -6°C, vorzugsweise weniger als oder gleich -9°C, vorzugsweise weniger als oder gleich -12°C, vorzugsweise weniger als oder gleich - 15°C gemäß der Norm ASTM D7346 aufweist.

5. Zusammensetzung nach einem der Ansprüche 1 bis 4, wobei das Additiv einen Gehalt an Tocopherol(en) von mindestens 1 Gew.-%, vorzugsweise mindestens 2 Gew.-%, besonders bevorzugt mindestens 2,5 Gew.-% und am meisten bevorzugt mindestens 2,8 Gew.-% bezogen auf das Gesamtgewicht des Zusatzstoffs umfasst.

6. Zusammensetzung nach einem der Ansprüche 1 bis 5, wobei der Gehalt an Triglyceriden in dem Additiv im Bereich von 0 bis 13 Gew.-% bezogen auf das Gesamtgewicht des Additivs liegt.

7. Zusammensetzung nach einem der Ansprüche 1 bis 6, wobei die flüssige Kohlenwasserstofffraktion (1) aus Benzinen und Dieseln ausgewählt ist.

8. Zusammensetzung nach einem der Ansprüche 1 bis 7, wobei der Gehalt des Additivs (2) 5 bis 10.000 Gew.-ppm, vorzugsweise 10 bis 1.000 Gew.-ppm, besonders bevorzugt 25 bis 500 Gew.-ppm und am meisten bevorzugt 150 bis 250 Gew.-ppm bezogen auf das Gesamtgewicht der Kraftstoffzusammensetzung beträgt.

9. Zusammensetzung nach einem der Ansprüche 1 bis 8, wobei der Schwefelgehalt weniger als oder gleich 500 Gew.-ppm, besonders bevorzugt weniger als oder gleich 50 Gew.-ppm und noch bevorzugter weniger als oder gleich 10 Gew.-ppm bezogen auf das Gesamtgewicht der Kraftstoffzusammensetzung beträgt.

10. Verwendung eines Additivs, das mindestens 6 Gew.-% bezogen auf das Gesamtgewicht des Additivs einer oder mehrerer Verbindungen, die unter freien Sterolen und/oder Sterolestern ausgewählt sind, und 70 bis 94 Gew.-% bezogen auf das Gesamtgewicht des Additivs freie Fettsäuren umfasst, zur Verbesserung der Schmiereigenschaften eines Kraftstoffs.

11. Verwendung gemäß Anspruch 10, **dadurch gekennzeichnet, dass** das Additiv so beschaffen ist, wie in einem der Ansprüche 2 bis 6 definiert.

12. Verwendung nach einem der Ansprüche 10 oder 11, wobei der Gehalt des Additivs 5 bis 10.000 Gew.-ppm, vorzugsweise 10 bis 1.000 Gew.-ppm, besonders bevorzugt 25 bis 500 Gew.-ppm und am meisten bevorzugter 150 bis 250 Gew.-ppm bezogen auf das Gesamtgewicht der Kraftstoffzusammensetzung beträgt.

13. Verwendung nach einem der Ansprüche 10 bis 12, wobei das Additiv in einer Dieselkraftstoffzusammensetzung mit einem Schwefelgehalt von 50 Gew.-ppm oder weniger bezogen auf das Gesamtgewicht der Zusammensetzung verwendet wird.

## Claims

1. An engine fuel composition comprising:
(1) at least one liquid hydrocarbon fraction from one or more sources selected from the group consisting of mineral, animal, plant and synthetic sources, and
(2) from 1 to 10,000 ppm by weight of an additive which comprises at least 6% by weight, with respect to the total weight of the additive, of one or more compounds selected from free sterols and/or sterol esters and from 70% to 94% by weight, with respect to the total weight of the additive, of free fatty acids.

2. Composition according to claim 1, wherein the additive comprises at least 2% by weight of sterol ester(s) and at least 4% by weight of free sterol(s), with respect to the total weight of the additive.

3. Composition according to one of claims 1 or 2, wherein the additive comprises at least 80% by weight of free fatty acids, with respect to the total weight of the additive.

4. Composition according to any one of claims 1 to 3, wherein the additive has a pour point less than or equal to 0°C, preferably less than or equal to -3°C, preferably less than or equal to -6°C, preferably less than or equal to -9°C, preferably less than or equal to -12°C, preferably less than or equal to -15°C, according to standard ASTM D7346.

5. Composition according to any one of claims 1 to 4, wherein the additive comprises a content of tocopherol(s) of at least 1%, preferably at least 2% by weight, even more preferably at least 2.5% by weight, and more preferably at least 2.8% by weight, with respect to the total weight of the additive.

6. Composition according to any one of claims 1 to 5, wherein the content of triglycerides in the additive is comprised within the range from 0 to 13% by weight, with respect to the total weight of the additive.

7. Composition according to any one of claims 1 to 6, wherein the liquid hydrocarbon fraction (1) is selected from gasolines and diesel fuels.

8. Composition according to any one of claims 1 to 7, wherein the content of the additive (2) ranges from 5 to 10,000 ppm by weight, preferably from 10 to 1000 ppm by weight, more preferably from 25 to 500 ppm by weight, and even more preferably from 150 to 250 ppm by weight, with respect to the total weight of the fuel composition.

9. Composition according to any one of claims 1 to 8, wherein the sulphur content is less than or equal to 500 ppm by weight, more preferably less than or equal to 50 ppm by weight, and even more preferably less than or equal to 10 ppm by weight, with respect to the total weight of the fuel composition.

10. Use for improving the lubricity properties of a fuel of an additive which comprises at least 6% by weight, with respect to the total weight of the additive, of one or more compounds selected from free sterols and/or sterol esters and from 70% to 94% by weight, with respect to the total weight of the additive, of free fatty acids.

11. Use according to claim 10, **characterised in that** the additive is as defined in any one of claims 2 to 6.

12. Use according to one of claims 10 or 11, wherein the content of the additive ranges from 5 to 10,000 ppm by weight, preferably from 10 to 1000 ppm by weight, more preferably from 25 to 500 ppm by weight, and even more preferably from 150 to 250 ppm by weight, with respect to the total weight of the fuel composition.

13. Use according to one of claims 10 to 12, wherein the additive is used in a diesel fuel composition having a sulphur content less than or equal to 50 ppm by weight with respect to the total weight of the composition.
